# FASCICULE DE BREVET EUROPEEN

(11) **EP 0 708 116 B1**
(45) Date de publication et mention de la délivrance du brevet: **12.12.2001**
(21) Numéro de dépôt: 95402085.5
(22) Date de dépôt: 15.09.1995
(51) Int. Cl.: C08F 10/00, C08F 4/657

(54) **Composante catalytique solide contenant du zirconium et des groupements cyclo-alcadienyle, son procédé d'obtention et procédé de polymérisation des oléfines en sa présence**
Zirconium und Cyclo-Alkadienylgruppen enthaltene fester Katalysatorbestandteil, Verfahren zu seiner Herstellung und Olefinpolymerisationsverfahren unter Anwendung desselben
Solid catalyst component containing zirconium and cyclo-alkadienyl groups, process for obtaining it and process for preparing olefin polymers using it

(30) Priorité: 21.10.1994 FR 9412604
(43) Date de publication de la demande: 24.04.1996
(73) Titulaire: Atofina, 92800 Puteaux (FR)
(72) Inventeur: Spitz, Roger, F-69360 Serezin (FR); Pasquet, Véronique, F-69003 Lyon (FR); Dupuy, Jérôme, F-31200 Toulouse (FR); Malinge, Jean, F-64300 Loubieng (FR)

(56) Documents cités:
- EP-A- 0 293 815
- EP-A- 0 426 643
- EP-A- 0 585 512
- EP-A- 0 587 440
- WO-A-95/07305
- US-A- 4 459 372
- DATABASE WPI Derwent Publications Ltd., London, GB; AN 84-284532 & JP-A-59 174 557 (MITSUI ENG & SHIPBUILD)
- DATABASE WPI Derwent Publications Ltd., London, GB; AN 78-87468a & SU-A-589 209 (PHYS CHEM INST)
- MACROMOLECULAR RAPID COMMUNICATIONS, vol. 15, no. 2, Février 1994 BASEL, pages 139-143, XP 000432250 SOGA KAZUO 'Highly isospecific SiO2 supported zirconocene catalyst activated by ordinary alkylaluminiums'

## Description

La polymérisation des oléfines en présence de catalyseurs de type métallocène à principalement été décrite en phase homogène. Dans ce type de polymérisation, le catalyseur, l'oléfine à polymériser et la polyoléfine synthétisée sont présents dans une même phase liquide, laquelle fait généralement intervenir un solvant.

La polymérisation des oléfines par les procédés dits hétérogènes, c'est-à-dire les procédés de polymérisation faisant intervenir une composante catalytique solide, présentent de nombreux avantages par rapport au procédé dit homogène. En particulier, les polyoléfines obtenues par les procédés hétérogènes se présentent sous forme de grains, de sorte qu'il n'est pas nécessaire de granuler la masse polymérisée comme c'est le cas à l'issu d'un procédé de polymérisation homogène. Au contraire des procédés hétérogènes, le procédé homogène fait de plus intervenir de fortes quantités de solvants qu'il est ensuite nécessaire de séparer de la polyoléfine.

De plus, par les procédés de polymérisation hétérogène, il est généralement possible d'influencer la morphologie du polymère final, c'est-à-dire la forme et la distribution des tailles de particule du polymère final, en jouant sur la morphologie des particules de composante catalytique solide.

La difficulté à préparer des composantes catalytiques solides à base de métallocène pour les procédés hétérogènes limite le développement de ces nouveaux catalyseurs.

L'article de S.Collins et coll. dans Macromolécules 1992, 25, 1780-1785 décrit une tentative de préparation de composantes catalytiques solides par adsorption de composés de formule Cp₂ZrCl₂ en surface de supports de type oxyde. La préparation de la composante se heurte cependant à la décomposition partielle du Cp₂ZrCl₂ de sorte qu'il est difficile d'enrichir la surface du support en espèce catalytique. Ce problème de décomposition peut être en partie résolu par un traitement préalable de la surface du support par AlMe₃, mais dans ce cas le Cp₂ZrCl₂ présente une faible tendance à s'adsorber. Les composantes catalytiques solides ainsi élaborées présentent une faible teneur en zirconium et en espèce catalytique active et sont, en particulier de ce fait, faiblement actives pour la polymérisation des oléfines.

La présente invention concerne une nouvelle composante catalytique solide de type métallocène, utilisable pour la polymérisation des oléfines par les procédés de polymérisation hétérogènes, ainsi qu'un procédé de fabrication de composante catalytique. La composante catalytique solide obtenue grâce à l'invention mène à des polymères aux distributions des masses moléculaires resserées, c'est-à-dire dont la polymolécularité Mw/Mn est généralement inférieure à 4 et pouvant même être inférieure à 3. Des polymères de faible polymolécularité sont particulièrement recherchés pour le moulage de pièces par injection car ces produits présentent une excellente stabilité dimentionnelle au démoulage. Le procédé selon l'invention est facile et rapide à mettre en oeuvre.

Par ailleurs, ces produits présentent un faible taux de matière extractible en raison de leur faible teneur en basses masses moléculaires. Ceci est particulièrement avantageux lorsque les questions d'odeur et/ou de goût et/ou d'impuretés sont importantes comme par exemple dans le secteur alimentaire ou celui du médical. De plus, en raison de leur faible polymolécularité, ces produits présentent des propriétés optiques améliorées et en particulier une excellente transparence.

De bonnes propriétés thermiques comme l'aptitude au soudage des films sont également obtenues.

La composante catalytique solide obtenue grâce à l'invention peut présenter une forte teneur en zirconium, supérieure à 2,5 % en poids, et peut catalyser la polymérisation des oléfines avec de fortes productivités.

La composante catalytique solide selon l'invention est susceptible d'être obtenue par
- a) traitement d'un support de composante catalytique pour la polymérisation des oléfines par un composé de formule MCl₄ en phase gazeuse, M représentant un atome de zirconium ou de hafnium, suivi d'un
- b) traitement par une solution ou une suspension d'un composé C capable de greffer un groupement au squellette cycloalcadiényle L à l'atome de métal M appartenant à l'espèce fixée sur le support.

Le support qu'il convient d'utiliser pour la mise en oeuvre de la présente invention est adapté à la polymérisation des oléfines, c'est-à-dire qu'il éclate dans des conditions habituelles de polymérisation.

L'homme du métier connaît les supports capables d'éclater en polymérisation. C'est grâce à cet éclatement que les ingrédients catalytiques déposés sur le support peuvent diffuser à travers les grains de polyoléfine en formation et peuvent ainsi continuer à catalyser la polymérisation.

Les supports habituellement utilisés pour l'élaboration de composantes catalytiques de type Ziegler-Natta peuvent être utilisés dans le cadre de la présente invention. Ces supports sont capables de fixer des composés de métaux de transition tels que le MCl₄ mis en oeuvre dans le cadre de la présente invention.

Pour la mise en oeuvre de la présente invention, le support doit de préférence être suffisamment anhydre pour que les espèces issues du MCl₄ et fixées sur le support contiennent un atome de M auquel au moins trois atomes de chlore sont liés. Cet objectif est généralement atteint lorsque la surface du support n'a plus d'eau adsorbée à sa surface et présente de préférence une concentration surfacique en groupements hydroxyles inférieure à 7 OH/nm² et de manière encore préférée inférieure à 3 OH/nm². Un support adapté à la mise en oeuvre de la présente invention présente de préférence une teneur en eau inférieure à 1 % en poids d'eau par gramme de support.

Une espèce contenant un atome de M et au moins trois atomes de chlore sera dite fixée par le support, si elle reste liée au support même après un traitement thermique à 300°C, 4 heures sous une pression absolue de 1.10⁻² millibars, ce qui peut se vérifier par analyse élémentaire. Le support peut être de nature diverse. Suivant sa nature, son état d'hydratation et son aptitude à retenir l'eau, on peut être amené à lui faire subir des traitements de déshydratation plus ou moins intenses.

L'homme du métier peut aboutir par des tests de routine au traitement de deshydratation qu'il convient d'appliquer au support qu'il a choisi.

Le support peut être en silice poreuse. Dans ce cas, avant le traitement par MCl₄, il est généralement nécessaire de traiter thermiquement cette silice de façon à éliminer l'eau adsorbée à sa surface. Ce traitement thermique peut par exemple être réalisé par chauffage entre 100 et 1000°C et de préférence entre 150 et 800°C sous balayage d'un gaz inerte comme l'azote ou l'argon, à la pression atmosphérique ou de préférence sous un vide de pression absolue de 1.10⁻² millibars ,pendant au moins 60 min. Pour ce traitement thermique, la silice peut être mélangée à du NH₄Cl de façon à accélérer la deshydratation.

Si ce traitement thermique est compris entre 100 et 450°C, il est souhaitable de le faire suivre d'un traitement de silanisation. Ce genre de traitement aboutit à greffer en surface du support une espèce dérivée du silicium pour rendre plus hydrophobe cette surface. Ce silane peut par exemple être un alkoxytrialkylsilane tel que le méthoxytriméthylsilane, un trialkylchlorosilane tel que le triméthylchlorosilane ou le triéthylchlorosilane.

Ce silane est généralement appliqué sur le support en réalisant une suspension de ce support dans une solution organique du silane. Ce silane pourra par exemple être en concentration comprise entre 0,1 et 2 moles par litre dans cette solution. Le solvant de cette solution pourra être choisi parmi les hydrocarbures aliphatiques linéaires ou ramifiés comme l'hexane ou l'heptane, les hydrocarbures alicycliques éventuellement substitués comme le cyclohexane, les hydrocarbures aromatiques comme le toluène, le benzène ou le xylène. Le traitement du support par la solution du silane est généralement réalisé entre 50°C et 150°C, pendant 1 à 48 heures et sous agitation.

Le support peut être en MgCl₂ activé, du type de ceux classiquement utilisés dans le domaine de la catalyse Ziegler-Natta. L'activation du MgCl₂ est réalisée de façon connue de l'homme du métier. Cette activation peut par exemple être réalisée par broyage sous atmosphère inerte. Ainsi, un support utilisable dans le cadre de la présente invention peut être réalisé par broyage sous atmosphère inerte d'un MgCl₂ anhydre commercial. L'usage d'un tel support ne nécessite aucun traitement de déshydratation particulier du moment que le MgCl₂ a constamment été manipulé et traité sous atmosphère inerte.

L'activation du MgCl₂ peut être réalisée par un solvant complexant, comme le tetrahydrofuranne (THF). Cette activation peut être réalisée comme décrit dans la demande de brevet EP 554 141. Dans ce cas, le support se présente sous la forme d'un complexe contenant MgCl₂ et un solvant complexant du MgCl₂.

Un tel support, manipulé sous atmosphère inerte, ne nécessite aucun traitement de déshydratation particulier avant le traitement par MCl₄ gazeux.

Le support peut être en MgCl₂ supporté sur silice poreuse. Le MgCl₂ est déposé sur la silice poreuse de façon connue de l'homme du métier, classiquement à partir d'une solution aqueuse de MgCl₂. Il convient que la couche de MgCl₂ déposée soit suffisamment fine pour ne pas obstruer les pores de la silice. Une couche d'une épaisseur monoatomique convient. Compte tenu de l'usage d'eau pour réaliser le support, il convient dans le cas présent de faire subir un traitement de déshydratation approprié au support de façon à ce que celui-ci présente les caractéristiques de teneur en eau et en groupement hydroxyles précédemment mentionnées. Ces caractéristiques peuvent être atteintes pour ce support par exemple par chauffage entre 100 et 700°C et de préférence entre 150 et 450°C sous balayage d'un gaz inerte comme l'azote ou l'argon et de préférence en présence d'un agent chlorant, à la pression atmosphérique ou de préférence sous un vide de pression absolue par exemple de 1.10⁻² millibars ,pendant au moins 60 min. Pour ce traitement thermique, le support peut être mélangée à du NH₄Cl de façon à accélérer la déshydratation.

Le traitement du support par MCl₄ en phase gazeuse est réalisé en mettant en présence la phase gazeuse avec le support que l'on souhaite enrichir en MCl₄. Cette mise en présence peut-être réalisée à une température de 160 à 450°C. Cette mise en présence doit être réalisée pour une durée suffisante compte tenu de l'importance de l'enrichissement en métal M que l'on recherche pour le support. Il convient d'introduire suffisamment de MCl₄ dans la phase gazeuse de façon à pouvoir atteindre la concentration recherchée en MCl₄ dans le support. Généralement, il convient d'atteindre une teneur supérieure à 2,5 % en poids de métal M dans le support avant le traitement par un composé comportant un groupement au squelette cycloalcadiényle.

On peut utiliser ou ne pas utiliser un gaz diluant du MCl₄. Ce gaz diluant doit être inerte vis à vis du support et du MCl₄. Il peut s'agir d'azote ou d'argon. Lorsqu' aucun gaz diluant n'est utilisé, la phase gazeuse est seulement constituée d'une pression partielle de MCl₄. Que l'on utilise un gaz diluant ou non, la concentration voulue en MCl₄ dans la phase gazeuse peut être obtenue par chauffage de MCl₄ solide.

Le traitement du support par la phase gazeuse peut être réalisée de diverses manières.

On peut par exemple faire parcourir un lit du support à traiter par la phase gazeuse. Compte tenu des pressions de vapeur saturantes du MCl₄, cette opération peut être réalisée en sublimant le MCl₄ entre 160 et 300°C et en faisant parcourir le lit de support par la phase gazeuse chargée de vapeur de MCl₄, le lit de support étant également porté à une température allant de 160 à 300°C.

On peut également condenser du MCl₄ gazeux sur le support porté à une température allant de 160 à 300°C, puis sublimer le MCl₄ condensé mais non fixé sur le support en portant ce dernier à une température supérieure ou égale à 250°C, voire supérieure ou égale à 300°C, et généralement inférieure à 450°C.

On peut également mélanger le support avec une poudre de MCl₄, porter ce mélange dans un réacteur à une température comprise entre 160°C et 300°C sous une atmosphère inerte par exemple d'azote ou d'argon mais en l'absence d'entrainement gazeux balayant le réacteur (le tube de Schlenk est un système adapté), puis éliminer au moins la majeure partie du MCl₄ non fixé sur le support par sublimation, par exemple en appliquant un vide à la température du traitement du support, ledit vide pouvant être réalisé à une pression absolue par exemple inférieure à 1.10⁻¹ mbar. Pour cette dernière technique, il convient de réaliser le mélange initial support/MCl₄ solide avec un excès de MCl₄, par rapport à la quantité de MCl₄ que l'on souhaite fixer sur le support. Généralement, le rapport masse de support/masse de MCl₄ solide peut aller de 2 à 20.

Après le traitement par MCl₄ en phase gazeuse, le support doit être traité par une solution ou une suspension d'un composé C capable de greffer un groupement au squellette cycloalcadiényle L à l'atome de métal M appartenant à l'espèce fixée sur le support et issue de MCl₄ , en remplacement d'un atome de chlore. Le groupement L peut comporter de 5 à 20 atomes de carbone. Un groupement au squellette cycloalcadiényle est soit un groupement cycloalcadiényle, soit un groupement cycloalcadiényle substitué, par exemple par un groupement hydrocarboné saturé ou non. L peut représenter le groupement cyclopentadiényle, le groupement indényle, le groupement méthylcyclopentadiényle, le groupement pentaméthylcyclopentadiényle.

Un tel composé C peut être choisi parmi ceux représentés par les formules LY ou LMgX dans lesquelles Y représente un atome de lithium ou de sodium, X représente un atome de chlore, de brome ou d'iode, L représente un groupement au squelette cycloalcadiényle comme précédemment défini. La solution ou la suspension du composé C contient le composé C et un solvant organique. Le solvant organique doit être inerte vis à vis du support, de l'espèce issue du MCl₄ fixée sur le support et du composé C. Il peut être choisi parmi les hydrocarbures aliphatiques comme l'hexane ou l'heptane, les hydrocarbures alicycliques comme le cyclohexane, ou les hydrocarbures aromatiques comme le toluène, le benzène ou le xylène, les éthers comme le THF ou le dioxanne, du moment que le solvant choisi ne dissout aucune espèce présente sur ou dans le support, c'est à dire solubilise de préférence moins de 0,1 g/litre du support mais dissout le composé C choisi de préférence à plus de 1 g/litre à la température choisie pour le traitement de greffage. Ainsi, si le support choisi contient du MgCl₂, l'usage de THF, de dioxanne et plus généralement d'un éther comme solvant de la solution ou suspension du composé C est déconseillé car ces éthers tendent à dissoudre le MgCl₂. Pour le traitement du support par le composé C, il suffit d'introduire une quantité de C telle que le nombre de mole de groupement L soit sensiblement égal au nombre de mole de métal M présent dans le support à traiter. Le rapport molaire L/M est de préférence supérieur à 0,8 et peut être compris entre 0,8 et 1,5. Il est inutile d'introduire un fort excès de composé C, et, pour certains supports comme la silice un tel excès est même néfaste sur le plan de l'activité du catalyseur. Si le rapport molaire L/M est inférieur à 0,8 le catalyseur présente une plus faible activité et mêne à des polymères aux indices de fluidité plus élevés. De façon surprenante, il est préférable de ne pas rechercher une stoéchiométrie voisine de deux groupes L par atome de métal M comme c'est le cas dans l'art antérieur qui fait intervenir Cp₂ZrCl₂.

La quantité de solvant à faire intervenir doit être suffisante pour que lors du traitement du support par la suspension ou la solution du composé C, le support soit bien imprégné de liquide. Généralement, ce traitement est réalisé sous agitation, laquelle est suffisamment lente pour ne pas provoquer d'attrition du support. De préférence, la suspension ou solution de composé C est préparée par mélange de composé C et de solvant à raison de 1.10⁻² mole à 1 mole de composé C par litre de solvant.

Le traitement du support par la suspension ou solution de C peut être réalisé à une température comprise entre 0 et 150°C, pendant 1 à 20 heures.

Ce traitement étant réalisé, il convient de laver la composante catalytique obtenue à l'aide d'un solvant hydrocarboné, de préférence un hydrocarbure aromatique tel que le toluène, le benzène ou le xylène, puis de sécher ladite composante, généralement entre 20 et 50°C sous un balayage d'un gaz inerte comme l'azote ou l'argon à la pression atmosphérique ou sous vide par exemple sous une pression absolue de 0,1 millibar.

La composante catalytique obtenue gràce à l'invention peut présenter une teneur en zirconium égale ou supérieure à 2,5% en poids. Elle peut contenir des atomes de zirconium et des groupements au squelette cycloalcadiényle L en des proportions telles que le rapport molaire L:Zr soit compris entre 0,7 et 1,7 et même 0,8 et 1,5. Il est inutile que la teneur en groupements L soit telle que L:Zr soit supérieure à 1,5 , et dans le cas d'un support silice, un tel excès en L est même néfaste sur le plan de l'activité du catalyseur. Lorsque le rapport L:Zr est inférieur à 0,8, plus le rapport L:Zr est faible, moins la composante catalytique est active en polymérisation, et plus le polymère formé présente des indices de fluidité élevé.

Des polymères peuvent être obtenus par polymérisation d'au moins une oléfine en présence de la composante catalytique précédemment décrite par les procédés en suspension, en solution, en phase gazeuse ou en masse. Les oléfines pouvant être utilisées pour la polymérisation, sont les alpha-oléfines comportant de deux à huit atomes de carbone, tel que l'éthylène ou le propylène, ou leurs mélanges. Le terme polymérisation dont il est fait usage dans la présente demande recouvre donc des réactions de copolymérisation, et le terme polymère recouvre des copolymères. Parmi les mélanges d'alpha-oléfine, on préfère un mélange d'éthylène et d'au moins une alpha-oléfine contenant de trois à huit atomes de carbone, le pourcentage d'éthylène dans le mélange étant généralement supérieur à 90 % en poids.

Les procédés de polymérisation en masse, en solution, en suspension ou en phase gazeuse sont bien connus dans leur principe de l'homme du métier.

Un procédé de polymérisation en masse consiste à réaliser une polymérisation dans l'une au moins des oléfines à polymériser maintenue à l'état liquide ou hypercritique.

Les procédés de polymérisation en solution ou en suspension consistent à réaliser une polymérisation en solution ou en suspension dans un milieu inerte et notamment dans un hydrocarbure aliphatique.

Pour un procédé de polymérisation en solution, on peut utiliser par exemple un hydrocarbure contenant de huit à dix atomes de carbone ou un mélange de ces hydrocarbures. Pour un procédé de polymérisation en suspension, on peut utiliser par exemple le n-heptane, le n-hexane, l'isohexane, l'isobutane ou un mélange d'isomères d'heptane.

Les conditions opératoires pour ces procédés de polymérisation en masse, en solution, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension ou en solution, on peut opérer à des températures allant jusqu'à 250°C et sous des pressions allant de la pression atmosphérique à 250 bars. Dans le cas d'un procédé de polymérisation en milieu propylène liquide, les températures peuvent aller jusqu'à la température critique. Pour un procédé de polymérisation en masse conduisant à des polyéthylènes ou à des copolymères majoritaires en éthylène, on peut opérer à des températures comprises entre 130°C et 350°C et sous des pressions allant de 200 à 3500 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf-5)°C, et sous une pression telle que l'oléfine ou les oléfines soient essentiellement en phase vapeur.

Un cocatalyseur capable d'activer le métal M de la composante catalytique obtenue grâce à l'invention doit être présent pendant la polymérisation. Ce cocatalyseur peut être un aluminoxane linéaire, de formule 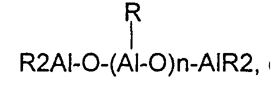 ou cyclique de formule

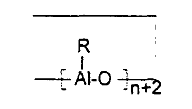

R représentant un radical alkyl comprenant de un à six atomes de carbone, et n représentant un nombre entier allant de 2 à 40, de préférence de 10 à 20. L'aluminoxane peut comporter des groupements R de nature différente. De préférence, les groupements R représentent tous des groupements méthyle. Par ailleurs, par cocatalyseur, on entend également les mélanges des composés précités.

Les quantités de cocatalyseur utilisées lors de la polymérisation doivent être suffisantes pour activer le métal M. Généralement, on en introduit une quantité telle que le rapport atomique de l'aluminium apporté par le cocatalyseur sur le métal M que l'on souhaite activer aille de 0,5 à 20000 et de préférence de 1 à 2000.

Les procédés de polymérisation en solution, en suspension, en masse, ou en phase gazeuse peuvent faire intervenir un agent de transfert de chaînes, de manière à contrôler l'indice de fusion du prépolymère ou polymère à produire. Comme agent de transfert de chaîne, on peut utiliser l'hydrogène, que l'on introduit en quantité pouvant aller jusqu'à 90 %, et se situant de préférence entre 0,01 et 60 % en mole de l'ensemble oléfines et hydrogène amené au réacteur.

Comme agent de transfert de chaîne, on peut également utiliser un dérivé de formule R¹R²R³Al dans laquelle R¹, R² et R³ pouvant être identiques ou différents, représentent chacun, soit un atome d'hydrogène, soit un atome d'halogène, soit un groupe alkyl contenant de 1 à 20 atomes de carbone, l'un au moins de R¹, R² ou R³ représentant un groupe alkyl. A titre d'exemple de composé adapté, on peut citer le dichlorure ou dibromure d'éthylaluminium, le dichlorure ou dibromure d'isobutylaluminium, le chlorure ou bromure ou iodure ou hydrure de diéthylaluminium, le chlorure ou bromure ou iodure ou hydrure de di-n propylaluminium, le chlorure ou bromure ou iodure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Ce dérivé de formule R¹R²R³Al peut généralement être introduit en polymérisation de façon à ce que le rapport atomique de l'aluminium apporté par ce dérivé sur le métal M contenu dans la composante solide aille de 0,5 à 20 000 et de préférence 1 à 2000.

L'utilisation d'un dérivé de formule R¹R²R³Al présente l'avantage, en particulier en comparaison avec l'hydrogène, de conférer un bon contrôle de la masse moléculaire du polymère. De plus, l'influence d'un dérivé de formule R¹R²R³Al sur la diminution des masses moléculaires moyennes en poids ou en nombre est considérablement plus forte, voire décuplée, en présence de la composante catalytique obtenue grâce à l'invention en comparaison avec son influence en présence d'une composante catalytique classique de type Ziegler-Natta à base de Mg, Cl et Ti.

Suivant la nature du groupement L, des polymères aux propriétés différentes peuvent être obtenus. Ainsi, si le groupement L est un groupement cyclopentadiényle, des polymères aux propriétés étonnantes peuvent être obtenus. Ces polymères peuvent présenter à la fois un I₂₁/I₅ élevé, pouvant être supérieur à 10, et une polydispersité Mw/Mn faible, pouvant être inférieure à 4. Ces caractéristiques sont l'indice de structures moléculaires particulières qui rendent le polymère facile à mettre en oeuvre.

Dans les exemples qui suivent les caractéristiques des supports, des composantes catalytiques et des polymères obtenus ont été déterminées par les techniques suivantes :
- % en poids de zirconium sur les supports et les composantes catalytiques solides: analyse élémentaire
- Indices de fluidité à 190°C sous 5 kg et 21 kg (représentés respectivement par I₅ et I₂₁ dans les tableaux) : norme ASTM D1238. Ces indices sont exprimés en grammes de polymère écoulé en 10 minutes.
- Masse moléculaire moyenne en poids (représentée par Mw) et masse moléculaire moyenne en nombre (représenté par Mn): chromatographie à perméation de gel à 145°C dans le trichlorobenzène. Mw/Mn représente les polymolécularités, c'est à dire le rapport des masses moléculaires moyennes en poids sur les masses moléculaires moyennes en nombre des polymères obtenus.
- Les concentrations surfaciques en groupements hydroxyles sur le support avant traitement par MCl₄ ont été déterminées par la technique décrite dans la thèse de V. Gaschard-Pasquet, Université Claude-Bernard-LYON 1, 1985. Cette concentration surfacique est exprimée en nombre de groupement OH par nm² et est indiquée dans la colonne "OH/nm²" des tableaux 1 et 2. Pour les exemples 14 à 24, les supports présentaient une concentration surfacique en groupement hydroxyle non mesurable et inférieure à 0,1 OH/nm².

Dans les tableaux, %Zr représente le pourcentage en poids de zirconium sur les supports avant greffage d'un groupement L.

Dans les tableaux, L/Zr représente le rapport molaire de la quantité de groupements au squelette de type cycloalcadiényle introduits pour le greffage sur la quantité de zirconium présent sur le support -avant le traitement de greffage.

Dans les tableaux, Ind et Cp représentent respectivement un groupement indényle et cyclopentadiényle.

Dans les exemples, l'activité initiale de la polymérisation est évaluée à partir de la vitesse de consommation de monomère au tout début de la polymérisation. Elle est exprimée en grammes de polymère formé par gramme de composante catalytique introduit et par heure.

Dans les exemples, la productivité en une heure est mesurée par arrêt de la polymérisation au bout d'une heure, et pesée du polymère obtenu. Elle est exprimée en grammes de polymère formé par gramme de composante catalytique introduit.

### EXEMPLES 1 à 5

On porte à une température T (voir tableau 1, colonne "T") pendant deux heures sous un vide de 1.10⁻³ mbar, 3 grammes de silice de marque GRACE 332 commercialisé par la société GRACE ladite silice présentant une surface de 300 m²/g et une porosité de 1,65 ml/g. Après retour à la températue ambiante, on mélange sous argon cette silice avec x grammes de ZrCl₄ en poudre (x = 1,6 g pour l'exemple 1 et x = 0,8 g pour les exemples 2 à 5), on place le mélange silice/ZrCl₄ dans un tube de Schlenk sous Argon maintenu à la pression atmosphérique, et l'on place enfin ledit tube dans un four à 300°C pendant 20 minutes. A l'issue de ces 20 minutes, le tube restant à 300°C est soumis à un vide de 1.10⁻³ mbar pendant 30 mn, de façon à débarasser la silice du ZrCl₄ non fixé sur la silice. On fait ensuite revenir dans le tube une pression d'une atmosphère d'argon et on laisse revenir à la température ambiante. On obtient ainsi une poudre A dont la teneur en zirconium exprimée en % en poids est indiquée dans le tableau 1 (voir colonne "%Zr").

On réalise une suspension d'lndényllithium dans le toluène en mélangeant 0,32 millimoles d'lndényllithium et 10 ml de toluène. On ajoute ensuite à cette suspension de la poudre A dont la préparation vient d'être décrite en quantité telle que le rapport molaire de la quantité d'lndényllithium introduite sur la quantité de zirconium contenu dans le support soit conforme à ce qui est souhaité (voir tableau 1, colonne "L/Zr"). On porte alors la suspension résultante à 100°C pendant 4 heures sous agitation. La suspension est ensuite filtrée et le solide obtenu est lavé par 3 fois 25 ml de toluène, puis 25 ml d'heptane, puis séché à 20 °C sous un vide de 1.10⁻³ mbar. Après retour sous une atmosphère d'argon et à la température ambiante, on obtient une composante catalytique selon l'invention. On introduit sous argon dans un réacteur de polymérisation en suspension, muni d'une agitation et d'une régulation de température, la préparation réalisée comme suit : dans 300 ml d'heptane, on introduit 1,5 ml d'une solution de méthylaluminoxane (MAO) dans le toluène à 10 % en poids de MAO (soit 10 millimoles de MAO sur la base de l'aluminium par litre d'heptane), ladite solution de MAO étant commercialisée par la société WITCO, puis on introduit 15 mg de la composante catalytique. On chasse l'atmosphère du réacteur par de l'éthylène, on monte la pression à 4 bars d'éthylène et l'on maintient cette pression par injection d'éthylène pendant 1 heure. Le tableau 1 rassemble les caractéristiques des polymères obtenus ainsi que certaines caractéristiques des conditions de préparation de la composante catalytique.

### EXEMPLES 6 à 8 (Comparatifs)

Les poudres A préparées pour les exemples 1, 2 et 4 sont introduites directement en polymérisation, c'est à dire sans subir de traitement à l'indényllithium.

Pour ce faire, on procède comme suit. On introduit sous argon dans un réacteur de polymérisation en suspension, muni d'une agitation et d'une régulation de température, la préparation réalisée comme suit : dans 300 ml d'heptane, on introduit 1,5 ml d'une solution de méthylaluminoxane (MAO) dans le toluène à 10 % en poids de MAO (soit 10 millimoles de MAO sur la base de l'aluminium par litre d'heptane), ladite solution de MAO étant commercialisée par la société WITCO, puis on introduit 100 mg de poudre A. On chasse l'atmosphère du réacteur par de l'éthylène, on monte la pression à 4 bars d'éthylène et l'on maintient cette pression par injection d'éthylène. On constate que l'activité initiale est inférieure à 50 grammes de polyéthylène par gramme de poudre A et par heure pour les trois poudres A testées. De plus, les polymères formés sont tellement visqueux que les I₅ et I₂₁ ne sont pas mesurables (pas d'écoulement lors de ces tests).

### EXEMPLES 9 à 11

On porte à une température T (voir tableau 2, colonne "T") pendant deux heures sous un vide de 1.10⁻³ mbar, 3 grammes de silice de marque GRACE 332 commercialisé par la société GRACE. Après retour à la température ambiante, et après avoir restauré une pression absolue d'une atmosphère d'argon, on ajoute sur cette silice 10 ml de toluène, puis x grammes de (CH₃)₃SiCl (x = 1,5 pour les exemples 9 et 10 et x = 1 pour l'exemple 11). La suspension ainsi réalisée est ensuite chauffée à 100°C pendant 24 heures sous agitation. Le solide ainsi obtenu, après retour à la température ambiante, est filtré, lavé par 3 fois 25 ml de toluène, puis 25 ml d'heptane, puis séché à 20°C sous un vide de 1.10⁻³ mbar.

La poudre ainsi obtenue est ensuite mélangée sous argon avec 0,8 gramme de ZrCl₄ en poudre. On place ce mélange dans un tube de Schlenck, toujours sous argon et l'on place enfin ledit tube dans un four à 300°C pendant 20 minutes, l'intérieur du tube étant maintenu à la pression atmosphérique et protégé de toute intrusion d'air par un courant d'argon ledit courant ne balayant pas l'intérieur du tube. A l'issue de ces 20 minutes, le tube restant à 300°C est soumis à un vide de 1.10⁻³ mbar pendant 30 mn de façon à éliminer le ZrCl₄ non fixé sur le support. On fait ensuite revenir dans le tube une pression d'une atmosphère d'argon et on laisse revenir à la température ambiante. On obtient ainsi une poudre B dont la teneur en zirconium exprimée en % en poids est indiquée dans le tableau 2 (voir colonne "%Zr").

On réalise une suspension d'lndényllithium dans le toluène en mélangeant 0,32 millimoles d'lndényllithium et 10 ml de toluène. On ajoute ensuite à cette suspension de la poudre B dont la préparation vient d'être décrite en quantité telle que le rapport molaire de la quantité d'lndényllithium introduite sur la quantité de zirconium contenu dans le support soit conforme à ce qui est souhaité (voir tableau 2, colonne "Ind/zr"). On porte alors la suspension résultante à 100°C pendant 4 heures sous agitation. La suspension est ensuite filtrée et le solide obtenu est lavé par 3 fois 25 ml de toluène, puis 25 ml d'heptane, puis séché à 20°C sous un vide de 1.10⁻³ mbar. Après retour sous une atmosphère d'argon et à la température ambiante, on obtient une composante catalytique selon l'invention.

On introduit sous argon dans un réacteur de polymérisation en suspension, muni d'une agitation et d'une régulation de température, la préparation réalisée comme suit : dans 300 ml d'heptane, on introduit 1,5 ml d'une solution de méthylaluminoxane (MAO) dans le toluène à 10% en poids de MAO (soit 10 millimoles de MAO sur la base de l'aluminium par litre d'heptane), ladite solution de MAO étant commercialisée par la société WITCO, puis on introduit 15 mg de la composante catalytique. On chasse l'atmosphère du réacteur par de l'éthylène, on monte la pression à 4 bars d'éthylène et l'on maintient cette pression par injection d'éthylène pendant 1 heure. Le tableau 2 rassemble les caractéristiques des polymères obtenus ainsi que certaines caractéristiques des conditions de préparation de la composante catalytique.

### EXEMPLE 12 et 13

Les poudres B préparées pour les exemples 9 et 11 sont introduits directement en polymérisation, c'est à dire sans subir de traitement à l'indényllithium. Pour ce faire, on procède comme suit. On introduit sous argon dans un réacteur de polymérisation en suspension, muni d'une agitation et d'une régulation de température, la préparation réalisée comme suit : dans 300 ml d'eptane, on introduit 1,5 ml d'une solution de méthylaluminoxane (MAO) dans le toluène à 10 % en poids de MAO (soit 10 millimoles de MAO sur la base de l'aluminium par litre d'heptane), ladite solution de MAO étant commercialisée par la société WITCO, puis on introduit 100 mg de poudre B. On chasse l'atmosphère du réacteur par de l'éthylène, on monte la pression à 4 bars d'éthylène et l'on maintient cette pression par injection d'éthylène. On constate que l'activité initiale est inférieure à 50 grammes de polyéthylène par gramme de poudre B et par heure pour les trois poudres B testées. De plus, les polymères formés sont tellements visqueux que les I₅ et I₂₁ ne sont pas mesurables (pas d'écoulement lors de ces tests).

### EXEMPLE 14

On mélange 6,2 grammes de silice de marque GRACE 332 commercialisé par la société GRACE et une solution constituée de 2,4 grammes de complexe MgCl₂,6H₂O et de 50 ml d'eau. On agite cette suspension 5 mn à température ambiante, puis l'on procède à l'élimination de l'eau de cette suspension à l'aide d'un évaporateur tournant, à 90°C, sous un vide de 20 mbar au début, pendant vingt minutes, puis sous un vide de 1.10⁻³ mbar pendant trente minutes, jusqu'à l'obtention d'une poudre non collante. La poudre résultante est mélangée avec 1,5 gramme de NH₄Cl, et ce mélange est chauffé en lit fluidité sous courant d'argon à 130°C pendant deux heures, puis à 450°C pendant deux heures. On obtient ainsi une poudre contenant 88% en poids de SiO₂ et 12% en poids de MgCl₂, le MgCl₂ étant situé en surface de la silice.

Cette poudre est traitée par ZrCl₄ comme la silice des exemples 1 à 5. On obtient ainsi une poudre C contenant 3,6% en poids de zirconium. La poudre C est traitée par une suspension d'indényllithium comme décrit pour la poudre A des exemples 1 à 4, le rapport molaire de la quantité d'indényllithium introduite sur la quantité de zirconium contenu dans le support étant conforme à ce qui est souhaité (voir tableau 3 colonne "L/Zr"). La composante catalytique ainsi obtenue contient 3% en poids de zirconium.

On décrit ci-après le dosage de la teneur en groupements Indényle contenus dans la composante catalytique solide :

Sur 120 mg de composante catalytique on ajoute 0,5 ml de méthanol, puis 5 ml de solution aqueuse d'HCL à 12 moles par litre d'HCL, et l'on agite 15 minutes à température ambiante. On filtre et on lave le filtrat par 4 fois 20 ml de méthanol. Les groupements Indényle de la composante catalytique ont été ainsi convertis en Indène, lequel est présent dans la solution qui vient d'être préparée. On mélange 1 ml de cette solution et 9 ml de méthanol. On dose alors l'indène contenu dans cette nouvelle solution par mesure de l'absorbance UV à 250 nm et par comparaison avec des solutions étalons d'Indène dans le méthanol.

On aboutit à la conclusion que le rapport molaire de la quantité de groupement Indényle contenue dans la composante catalytique sur la quantité de zirconium est de 0,9.

La composante catalytique ainsi obtenue est engagée en polymérisation dans des conditions identiques à celles de la polymérisation en présence des composantes catalytiques des exemples 1 à 5. Le tableau 3 rassemble les résultats.

### EXEMPLE 15

On procède comme pour l'exemple 14, sauf que l'on remplace l'indényllithium de l'exemple 14 par le cyclopentadiényllithium, le rapport L/Zr étant ici de 1,2. Le tableau 3 rassemble les résultats.

### EXEMPLE 16

On prépare un complexe (MgCl₂-1,5 THF) comme décrit dans l'exemple n°1 de la demande de brevet européenne dont le numéro de publication est EP 554 141. Ce support est ensuite traité par ZrCl₄ puis par une suspension d'indényllithium comme la silice des exemples 1 à 4. La composante catalytique ainsi obtenue est engagée en polymérisation dans des conditions identiques à celle de la polymérisation en présence des composantes catalytiques des exemples 1 à 5. Le tableau 3 rassemble les résultats.

### EXEMPLE 17

On procède comme pour l'exemple 16, sauf que l'on remplace l'indényllithium de l'exemple 16 par le cyclopentadiényllithium, le rapport L/Zr étant ici de 1,1. Le tableau 3 rassemble les résultats.

### EXEMPLES 18 et 19

On procède comme pour l'exemple 14, sauf que l'on introduit l'Indényllithium en respectant un rapport L/Zr de 0,5 pour l'exemple 18 et de 3 pour l'exemple 19. Le tableau 3 rassemble les résultats.

### EXEMPLE 20

On procède comme pour l'exemple 15, sauf que l'on introduit le cyclopentadiényllithium en respectant un rapport L/Zr de 3,2. Le tableau 3 rassemble les résultats.

### EXEMPLES 21 et 22

On procède comme pour l'exemple 14, sauf que juste après l'introduction de la solution de méthylaluminoxane, on introduit une solution de triéthylaluminium (TEA) dans l'hexane à 2 moles par litre de triéthylaluminium, à raison de 0,3 millimoles de TEA pour l'exemple 21 et 0,9 millimoles de TEA pour l'exemple 22. Le tableau 4 rassemble les résultats. Pour la comparaison, les résultats de l'exemple 14 sont réintroduits dans le tabeau 4.

### EXEMPLE 23

On utilise la composante catalytique de l'exemple 14 en polymérisation en phase gazeuse.

### Synthèse d'un prépolymère :

Dans un ballon de 1 litre sous atmosphère inerte, on introduit 100 g de poudre de polyéthylène haute densité de diamètre moyen égal à 248 µm préalablement tamisé à 400 µm, 15 ml d'une solution dans le toluène contenant 30 % en poids de MAO et 0.473 g de la composante catalytique synthétisée dans l'exemple 14. Le mélange est homogénéisé et le toluène est partiellement évaporé sous vide (10⁻² mbar) à température ambiante jusqu'à obtention d'une poudre fluide. Ce mélange est introduit dans un réacteur de 2.5 litres muni d'un agitateur tournant à 400 tr/min, ledit réacteur étant maintenu sous azote et chauffé à 60°C. Le réacteur est pressurisé par 1 bar d'azote et est alimenté par un débit contrôlé d'éthylène à 15 Nl/h pendant 2 heures. On récupère ainsi 134.5 g de polymère contenant 120 ppm de Zr et 4000 ppm d'AI, ce qui correspond à un degré d'avancement d'environ 300 g de prépolymère par gramme de composante catalytique solide.

### Polymérisation :

Le prépolymère est engagé en polymérisation en phase gazeuse de l'éthylène dans les conditions suivantes : dans un réacteur de 2.5 litres muni d'une agitation et d'une régulation de température, on introduit sous atmosphère d'argon à 85°C et sous agitation de 400 tr/min, 12 g de poudre sèche et inerte de polyéthylène provenant d'une polymérisation identique à celle présentement décrite. On introduit ensuite par l'intermédiaire d'un sas et par poussée à l'argon 7 g de prépolymère, et l'on injecte de l'éthylène jusqu'à obtenir une pression totale de 11 bars dans le réacteur (dont 1 bar d'argon). La pression est maintenue constante par l'injection d'éthylène. Après 100 min de réaction, la polymérisation est stoppée par coupure de l'alimentation en éthylène, le réacteur est décomprimé, purgé à l'argon et refroidit. On a ainsi produit 152 g de polymère (cette valeur exclut les 12 g de poudre sèche de polyéthylène chargés dans le réacteur avant la polymérisation).

La productivité a donc été de 22 g de polyéthylène par g de prépolymère soit 6200 g de polyéthylène par g de composante catalytique.
Le polymère obtenu présente les caractéristiques suivantes : I₅ = 1 gramme/10 min, 121 = 6,7 grammes/10 min, I₂₁/I₅ = 6,7, Mw = 150 000 grammes par mole, Mw/Mn = 2,5.

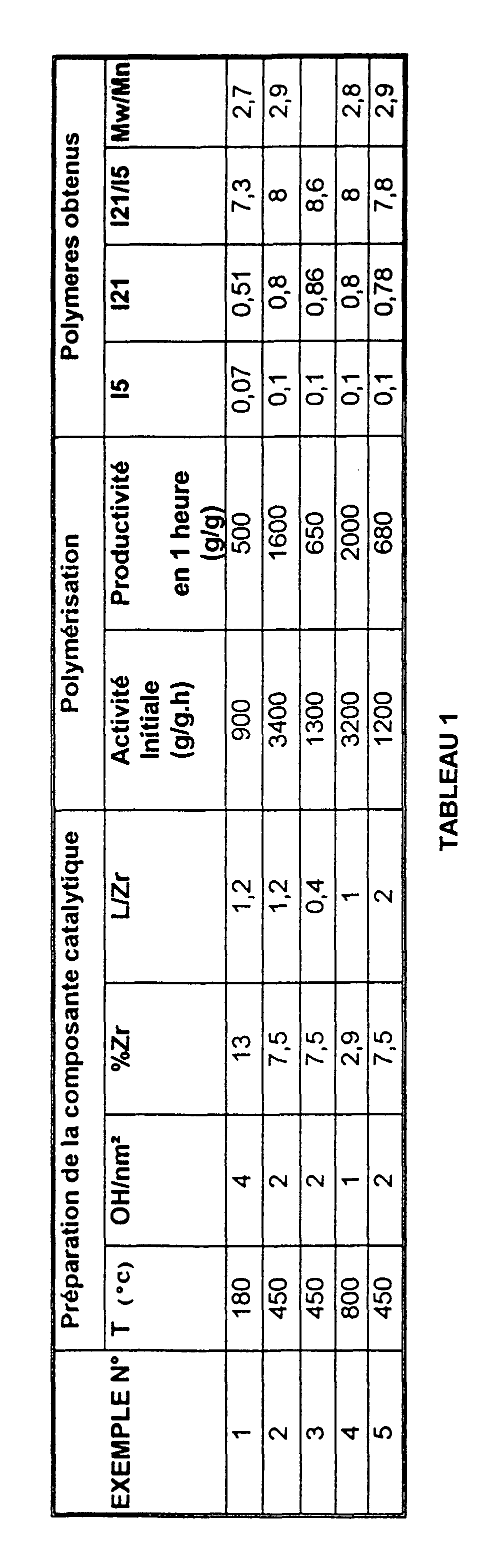

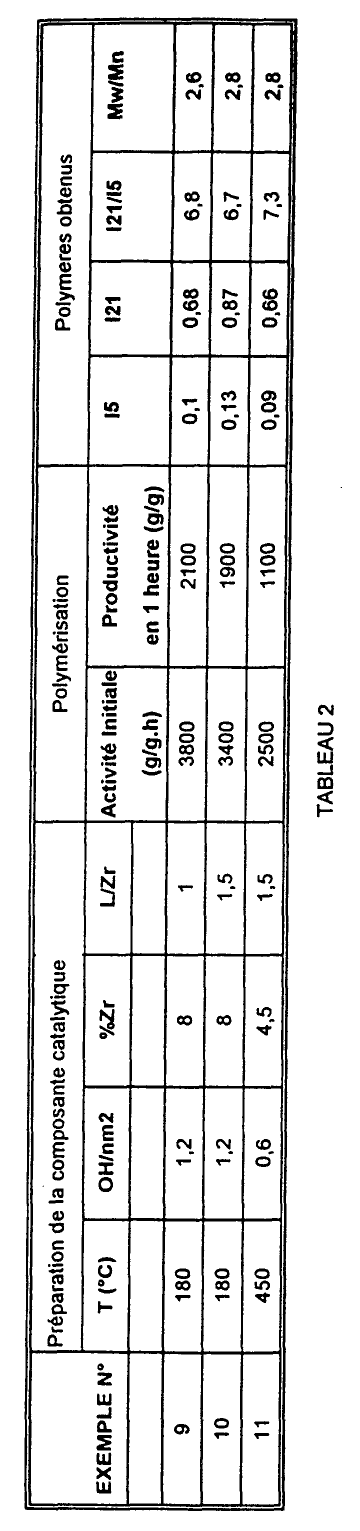

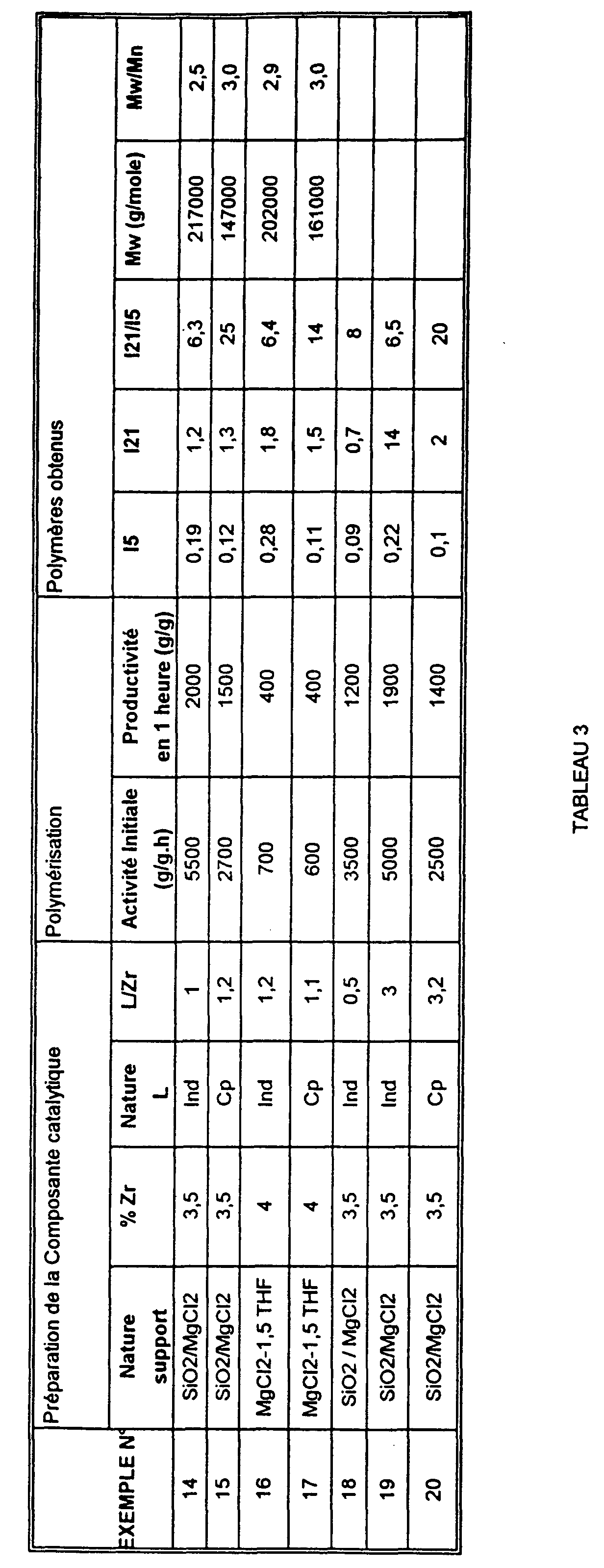

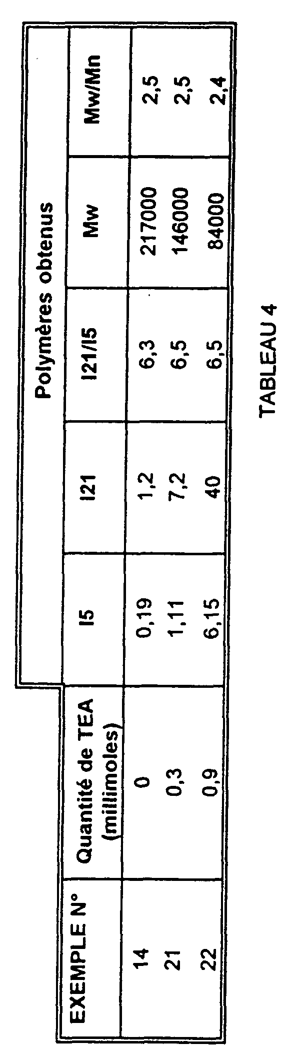

## Revendications

1. Procédé de fabrication d'une composante catalytique solide contenant des atomes de zirconium ou de hafnium **caractérisé en ce qu'**il comprend une étape de traitement d'un support de composante catalytique pour la polymérisation des oléfines par un composé de formule MCl₄ en phase gazeuse, M représentant un atome de zirconium ou de hafnium, suivie d'un traitement par une solution ou suspension d'un composé C capable de greffer un groupement au squelette cycloalcadiényle L à l'atome de métal M appartenant à l'espèce fixée sur le support.

2. Procédé selon la revendication 1 **caractérisé en ce que** le support présente une concentration surfacique en groupements hydroxyles inférieure à 7 OH/nm².

3. Procédé selon la revendication 2 **caractérisé en ce que** le support présente une concentration surfacique en groupements hydroxyles inférieure à 3 OH/nm².

4. Procédé selon l'une des revendications 1 à 3 **caractérisé en ce que** le support contient moins de 1 % en poids d'eau.

5. Procédé selon l'une des revendications 1 à 4 **caractérisé en ce que** le support est en silice poreuse.

6. Procédé selon la revendication 5 **caractérisé en ce que** la silice poreuse a subit un traitement thermique puis un traitement de silanisation.

7. Procédé selon la revendication 6 **caractérisé en ce que** le traitement thermique a été réalisé entre 100 et 450°C.

8. Procédé selon la revendication 6 ou 7 **caractérisé en ce que** le triméthylchlorosilane a été utilisé pour le traitement de silanisation.

9. Procédé selon l'une des revendications 1 à 4 **caractérisé en ce que** le support est en MgCl₂ activé.

10. Procédé selon l'une des revendications 1 à 4 **caractérisé en ce que** le support est un complexe (MgCl₂-solvant complexant de MgCl₂).

11. Procédé selon la revendication 10 **caractérisé en ce que** le solvant complexant est le tétrahydrofurane.

12. Procédé selon l'une des revendications 1 à 4 **caractérisé en ce que** le support est en silice poreuse recouverte de MgCl₂.

13. Procédé selon l'une des revendications 1 à 12 **caractérisé en ce que** le traitement du support par MCl₄ gazeux est réalisé par mélange du support avec une poudre de MCl₄ suivi d'un chauffage.

14. Procédé selon l'une des revendications 1 à 13 **caractérisé en ce que** le traitement du support par MCl₄ gazeux est réalisé à une température de 160 à 450°C.

15. Procédé selon l'une des revendications 1 à 14 **caractérisé en ce que** le groupement L contient de 5 à 20 atomes de carbone.

16. Procédé selon la revendication 15 **caractérisé en ce que** le groupement L est un groupement cyclopentadiényle.

17. Procédé selon la revendication 15 **caractérisé en ce que** le groupement L est un groupement indényle.

18. Procédé selon l'une des revendications 1 à 17 **caractérisé en ce que** le traitement par le composé C est réalisé en présence d'un solvant solubilisant moins de 0,1 g/litre du support et solubilisant le composé C à raison de plus de 1 g/litre à la température choisie pour ledit traitement.

19. Procédé selon la revendication 18 **caractérisé en ce que** le composé C est introduit à l'état de solution ou suspension à raison de 1.10⁻² mole à 1 mole de composé C par litre de solvant.

20. Procédé selon l'une des revendications 1 à 19 **caractérisé en ce que** le traitement par le composé C est réalisé à une température comprise entre 0 et 150°C.

21. Procédé selon l'une des revendications 1 à 20 **caractérisé en ce que** le composé C est introduit de façon à ce que le rapport molaire L/M soit compris entre 0,8 et 1,5.

22. Procédé selon l'une des revendications précédentes **caractérisé en ce que** lors du traitement par le composé C, la réaction de ce dernier consiste en un greffage d'un groupement au squelette cycloalcadiényle L à l'atome de métal M appartenant à l'espèce fixée sur le support.

23. Procédé selon la revendication précédente, **caractérisé en ce que** le groupement L est hydrocarboné.

24. Composante catalytique solide susceptible d'être obtenue par le procédé de l'une des revendications 22 ou 23.

25. Composante selon la revendication précédente **caractérisée en ce qu'**elle contient au moins 2,5 % en poids de zirconium.

26. Composante selon la revendication 24 ou 25 **caractérisé en ce que** le rapport L : Zr est compris entre 0,7 et 1,7.

27. Composante selon la revendication précédente **caractérisé en ce que** le rapport molaire L : Zr est compris entre 0,8 et 1,5.

28. Composante catalytique solide pour la polymérisation des oléfines comprenant au moins 2,5 % en poids de zirconium et comprenant des groupements au squelette cycloalcadiényle L, le rapport molaire L : Zr étant compris entre 0,7 et 1,7.

29. Composante selon la revendication précédente **caractérisée en ce que** le rapport molaire L : Zr est compris entre 0,8 et 1,5.

30. Procédé de polymérisation d'au moins une oléfine en présence de la composante catalytique de l'une des revendications 24 à 29.

## Patentansprüche

1. Verfahren zur Herstellung einer festen katalytischen Komponente mit Zirconium- oder Hafniumatomen, **dadurch gekennzeichnet, daß** es einen Schritt der Behandlung von einem Träger einer katalytischen Komponente für die Olefinpolymerisation mit einer Verbindung der Formel MCl₄ in Gasphase umfaßt, wobei M ein Zirconium- oder Hafniumatom bedeutet, gefolgt von einer Behandlung mit einer Lösung oder Suspension einer Verbindung C, die geeignet ist, eine Gruppierung am Cycloalkadienylgerüst L auf das Metallatom M aufzupfropfen, das zu der mit dem Träger verbundenen Spezies gehört.

2. Verfahren nach Anspruch 1, **dadurch gekennzeichnet, daß** der Träger eine flächenbezogene Konzentration an Hydroxylgruppen von weniger als 7 OH/nm² hat.

3. Verfahren nach Anspruch 2, **dadurch gekennzeichnet, daß** der Träger eine flächenbezogene Konzentration an Hydroxylgruppen von weniger als 3 OH/nm² hat.

4. Verfahren nach einem der Ansprüche 1 bis 3, **dadurch gekennzeichnet, daß** der Träger weniger als 1 Gew.-% Wasser enthält.

5. Verfahren nach einem der Ansprüche 1 bis 4, **dadurch gekennzeichnet, daß** der Träger aus poröser Kieselsäure besteht.

6. Verfahren nach Anspruch 5, **dadurch gekennzeichnet, daß** die poröse Kieselsäure einer thermischen Behandlung und dann einer Silanisierung unterzogen worden ist.

7. Verfahren nach Anspruch 6, **dadurch gekennzeichnet, daß** die thermische Behandlung zwischen 100 und 450 °C durchgeführt worden ist.

8. Verfahren nach Anspruch 6 oder 7, **dadurch gekennzeichnet, daß** Trimethylchlorsilan für die Silanisierung verwendet worden ist.

9. Verfahren nach einem der Ansprüche 1 bis 4, **dadurch gekennzeichnet, daß** der Träger aus aktiviertem MgCl₂ besteht.

10. Verfahren nach einem der Ansprüche 1 bis 4, **dadurch gekennzeichnet, daß** der Träger ein Komplex (MgCl₂ - komplexbildendes Lösungsmittel für MgCl₂) ist.

11. Verfahren nach Anspruch 10, **dadurch gekennzeichnet, daß** das komplexbildende Lösungsmittel Tetrahydrofuran ist.

12. Verfahren nach einem der Ansprüche 1 bis 4, **dadurch gekennzeichnet, daß** der Träger aus einer mit MgCl₂ überzogenen porösen Kieselsäure besteht.

13. Verfahren nach einem der Ansprüche 1 bis 12, **dadurch gekennzeichnet, daß** die Behandlung des Trägers mit gasförmigem MCl₄ durch Mischen des Trägers mit einem MCl₄-Pulver, gefolgt von einer Erwärmung, durchgeführt wird.

14. Verfahren nach einem der Ansprüche 1 bis 13, **dadurch gekennzeichnet, daß** die Behandlung des Trägers mit gasförmigem MCl₄ bei einer Temperatur von 160 bis 450 °C durchgeführt wird.

15. Verfahren nach einem der Ansprüche 1 bis 14, **dadurch gekennzeichnet, daß** die Gruppierung L 5 bis 20 Kohlenstoffatome enthält.

16. Verfahren nach Anspruch 15, **dadurch gekennzeichnet, daß** die Gruppierung L eine Cyclopentadienylgruppe ist.

17. Verfahren nach Anspruch 15, **dadurch gekennzeichnet, daß** die Gruppierung L eine Indenylgruppe ist.

18. Verfahren nach einem der Ansprüche 1 bis 17, **dadurch gekennzeichnet, daß** die Behandlung mit der Verbindung C in Gegenwart eines Lösungsmittels durchgeführt wird, das weniger als 0,1 g/Liter des Trägers und die Verbindung C in einer Menge von mehr als 1 g/Liter bei der für die genannte Behandlung gewählten Temperatur solubilisiert.

19. Verfahren nach Anspruch 18, **dadurch gekennzeichnet, daß** die Verbindung C in Form einer Lösung oder Suspension in einer Menge von 1·10⁻² mol bis 1 mol der Verbindung C pro Liter des Lösungsmittels zugegeben wird.

20. Verfahren nach einem der Ansprüche 1 bis 19, **dadurch gekennzeichnet, daß** die Behandlung mit der Verbindung C bei einer Temperatur zwischen 0 und 150 °C durchgeführt wird.

21. Verfahren nach einem der Ansprüche 1 bis 20, **dadurch gekennzeichnet, daß** die Verbindung C so zugegeben wird, daß das Molverhältnis L/M zwischen 0,8 und 1,5 liegt.

22. Verfahren nach einem der vorangehenden Ansprüche, **dadurch gekennzeichnet, daß** während der Behandlung mit der Verbindung C die Reaktion von letzterem in einer Aufpfropfung einer Gruppierung am Cycloalkadienylgerüst L auf das Metallatom M besteht, das zu der mit dem Träger verbundenen Spezies gehört.

23. Verfahren nach dem vorangehenden Anspruch, **dadurch gekennzeichnet, daß** die Gruppierung L kohlenwasserstoffhaltig ist.

24. Feste katalytische Komponente, die geeignet ist, durch das Verfahren nach einem der Ansprüche 22 oder 23 hergestellt zu werden.

25. Komponente nach dem vorangehenden Anspruch, **dadurch gekennzeichnet, daß** sie mindestens 2,5 Gew.-% Zirconium enthält.

26. Komponente nach Anspruch 24 oder 25, **dadurch gekennzeichnet, daß** das Molverhältnis L:Zr zwischen 0,7 und 1,7 liegt.

27. Komponente nach dem vorangehenden Anspruch, **dadurch gekennzeichnet, daß** das Molverhältnis L:Zr zwischen 0,8 und 1,5 liegt.

28. Feste katalytische Komponente für die Polymerisation von Olefinen mit mindestens 2,5 Gew.-% Zirconium und mit Gruppierungen am Cycloalkadienylgerüst L, wobei das Molverhältnis L:Zr zwischen 0,7 und 1,7 liegt.

29. Komponente nach dem vorangehenden Anspruch, **dadurch gekennzeichnet, daß** das Molverhältnis L:Zr zwischen 0,8 und 1,5 liegt.

30. Verfahren zur Polymerisation mindestens eines Olefins in Gegenwart der katalytischen Komponente nach einem der Ansprüche 24 bis 29.

## Claims

1. Process for the manufacture of a solid catalytic component containing zirconium or hafnium atoms, **characterized in that** it comprises a stage of treatment of a catalytic component support for the polymerization of olefins with a compound of formula MCl₄ in the gas phase, M representing a zirconium or hafnium atom, followed by a treatment with a solution or suspension of a compound C capable of grafting a group containing the cycloalkadienyl skeleton L to the metal atom M belonging to the species attached to the support.

2. Process according to Claim 1, **characterized in that** the support has a surface concentration of hydroxyl groups of less than 7 OH/nm².

3. Process according to Claim 2, **characterized in that** the support has a surface concentration of hydroxyl groups of less than 3 OH/nm².

4. Process according to one of Claims 1 to 3, **characterized in that** the support contains less than 1 weight % of water.

5. Process according to one of Claims 1 to 4, **characterized in that** the support is made of porous silica.

6. Process according to Claim 5, **characterized in that** the porous silica has undergone a heat treatment and then to a silanization treatment.

7. Process according to Claim 6, **characterized in that** the heat treatment was carried out between 100 and 450°C.

8. Process according to Claim 6 or 7, **characterized in that** trimethylchlorosilane was used for the silanization treatment.

9. Process according to one of Claims 1 to 4, **characterized in that** the support is made of activated MgCl₂.

10. Process according to one of Claims 1 to 4, **characterized in that** the support is a complex (MgCl₂-complexing solvent for MgCl₂).

11. Process according to Claim 10, **characterized in that** the complexing solvent is tetrahydrofuran.

12. Process according to one of Claims 1 to 4, **characterized in that** the support is made of porous silica covered with MgCl₂.

13. Process according to one of Claims 1 to 12, **characterized in that** treatment of the support with gaseous MCl₄ is carried out by mixing the support with an MCl₄ powder, followed by heating.

14. Process according to one of Claims 1 to 13, **characterized in that** treatment of the support with gaseous MCl₄ is carried out at a temperature of 160 to 450°C.

15. Process according to one of Claims 1 to 14, **characterized in that** the L group contains from 5 to 20 carbon atoms.

16. Process according to Claim 15, **characterized in that** the L group is a cyclopentadienyl group.

17. Process according to Claim 15, **characterized in that** the L group is an indenyl group.

18. Process according to one of Claims 1 to 17, **characterized in that** the treatment with the compound C is carried out in the presence of a solvent which dissolves less than 0.1 g/litre of the support and which dissolves the compound C at the rate of more than 1 g/litre at the temperature chosen for the said treatment.

19. Process according to Claim 18, **characterized in that** the compound C is introduced in the form of a solution or suspension at the rate of 1 × 10⁻² mol to 1 mol of compound C per litre of solvent.

20. Process according to one of Claims 1 to 19, **characterized in that** the treatment with the compound C is carried out at a temperature of between 0 and 150°C.

21. Process according to one of Claims 1 to 20, **characterized in that** the compound C is introduced so that the L/M molar ratio is between 0.8 and 1.5.

22. Process according to one of the proceeding claims, **characterized in that**, during the treatment with compound C, the reaction of this compound consists in grafting a group containing the cycloalkadienyl skeleton L to the metal atom M belonging to the species attached to the support.

23. Process according to the previous claim, **characterized in that** the group L is hydrocarbon-based.

24. Solid catalytic component capable of being obtained by the process of either of Claims 22 and 23.

25. Component according to the preceding claim, **characterized in that** it contains at least 2.5 weight % of zirconium.

26. Component according to Claim 24 or 25, **characterized in that** the L:Zr ratio is between 0.7 and 1.7.

27. Component according to the preceding claim, **characterized in that** the L:Zr ratio is between 0.8 and 1.5.

28. Solid catalytic component for the poymerization of olefins, comprising at least 2.5 weight % of zirconium and comprising groups containing the cycloalkadienyl skeleton L, the molar ratio L:Zr being between 0.7 and 1.7.

29. Component according to the preceding claim **characterized in that** the molar ratio L:Zr is between 0.8 and 1.5.

30. Process for the polymerization of at least one olefin in the presence of the catalytic component of one of Claims 24 to 29.
